# EUROPÄISCHE PATENTANMELDUNG

(11) **EP 2 016 824 A1**
(43) Veröffentlichungstag der Anmeldung: **21.01.2009**
(21) Anmeldenummer: 07112810.2
(22) Anmeldetag: 20.07.2007
(51) Int. Cl.: A01N 25/08, A01N 25/34, A01N 59/16, A01N 25/10, A01P 1/00, D06M 11/83, D01F 1/10

(54) **Biozide Mischungen, deren Herstellung und Verwendungen**

(71) Anmelder: Sanitized AG, 3400 Burgdorf (CH); Bühler PARTEC GmbH, 66123 Saarbrücken (DE)
(72) Erfinder: Zeller, Dietmar, 3063 Ittigen (CH); Steingröver, Klaus, 66125 Saarbrücken (DE); Tabellion, Frank, 66121 Saarbrücken (DE)
(74) Vertreter: Jacobi, Markus Alexander

(57) **Zusammenfassung**

Eine biozide Wirkstoffkomponente auf Basis von anorganischen Trägerpartikeln, die eine biozide Komponente enthalten, wobei die anorganischen Trägerpartikel eine runde Gestalt haben, kann z. B. zur Ausrüstung von Fasern eingesetzt werden. Der Einsatz von bioziden Mischungen mit Wirkstoffkomponenten mit runder Gestalt und besonders glatter Oberfläche z. B. in synthetischen Spinnfasern, Folien und Polymer-Formteilen führt zu einer Vermeidung von Abrasion während der Herstellung.

## Beschreibung

Die vorliegende Erfindung bezieht sich auf biozide Mischungen und auf ein Verfahren zu deren Herstellung sowie auf die Verwendungen dieser Mischungen. Die Erfindung betrifft auch ein biozides Polymer, dessen Herstellung und dessen Verwendung für die Fertigung biozid ausgerüsteter Formkörper und Fasern auf Polymerbasis.

Biozide Mischungen, d.h. Mischungen, die eine biozide Wirkung insbesondere auf Mikroorganismen haben, werden zur Verbesserung der Hygiene, zur Desinfektion und allgemeinen zum Schutz von Gegenständen, Textilien und dergleichen vor einem Befall durch Mikroorganismen wie z.B. Bakterien, Pilzen und Algen verwendet. Neben zahlreichen, meist sehr spezifischen organischen Wirkstoffen können hierzu auch weniger spezifisch wirkende Biozide wie Wasserstoffperoxid und Metallionen, insbesondere Silberionen verwendet werden.

Es besteht ein ständiger Bedarf an der Entwicklung von neuen bioziden, mikrobiziden und antimikrobiellen Wirkstoffkomponenten, die möglichst viele der folgenden Kriterien erfüllen:
- Sie sollen mit den üblichen Standardmethoden der Industrie appliziert werden können;
- Sie sollen mit möglichst vielen anderen Komponenten kombinierbar sein;
- Sie sollen möglichst auch bei höheren Temperaturen beständig sein;
- Sie sollen möglichst wenig Einfluss auf die sonstigen Eigenschaften der Materialien haben;
- Sie sollen möglichst behördlich (z. B. unter EPA und unter BPD ) notifiziert sein oder registriert werden können,

Stark oxidierend wirkendes Wasserstoffperoxid zerstört bekanntermaßen die Zellwände von Mikroorganismen wie Viren, Amöben, Bakterien, Pilzen, Algen und Sporen. Dabei zerfällt das Wasserstoffperoxid zu Wasser und molekularem Sauerstoff. Es bleiben neben den abgetöteten Mikrobenzellen keine Desinfektionsmittel-Rückstände zurück.

Auch die Verwendung von Silber bzw. Silberionen als biozide Komponente ist seit langem bekannt. Ihre Wirkung beruht auf einer Störung des Stoffwechsels von Mikroben, wodurch deren Wachstum und Vermehrung beeinträchtigt wird. Wenn auch in der Regel keine schlagartige Abtötung einer grossen Anzahl von Mikroben, wie bei Verwendung von Wasserstoffperoxid erfolgt, eignen sich Silberionen dennoch zu einer nachhaltigen Bekämpfung von Mikroben, da die Silberionen - im Gegensatz zu Wasserstoffperoxid - nicht verbraucht werden, sondern in der mikrobenhaltigen Umgebung auch nach längerer Zeit biozid wirksam sind. Bei einer lediglich oberflächlichen Anwendung von Silber/Silberionen auf Formkörpern oder auf Textilfasern werden die bioziden Silberionen spätestens beim Reinigungs- oder Waschvorgang von den Oberflächen entfernt, so dass die biozide Wirkung auf den Oberflächen verloren geht. Auch silberhaltige Beschichtungen von Formkörpern oder Textilfasern (sogenannte "biozide Ausrüstungen") nutzen sich nach längerem Gebrauch bzw. Tragen der Textilien nach und nach ab, was ebenfalls zu einer nachlassenden bioziden Wirkung führt.

Silber in Form freiwerdender Ag⁺-Ionen ist bereits in sehr geringen Konzentrationen im unterem ppm-Bereich toxisch für den Stoffwechsel und die Vermehrung von Bakterien. Das betrifft gram-positive als auch gram-negative Bakterien. In anderen Anwendungen werden ähnliche antimikrobielle Wirkungen mit weiteren metallischen Wirkstoffen erreicht. Auch werden eine antibakterielle und fungizide Wirkung mit aus toxikologischer Sicht bedenklichen Schwermetallen wie Kupfer, Cadmium, Nickel, Zinn, Blei, Chrom oder Arsen erreicht. Bor und Zink nehmen hierbei eine Zwischenstellung ein, sie sind einerseits weniger stark antimikrobiell wirksam, andererseits toxikologisch weitgehend akzeptiert. Außerdem wird dem Element Bor eine gewisse zusätzliche Wirkung gegen Milben zugeschrieben.

Silber als Metall ist chemisch sehr stabil und zeigt unter Gebrauchsbedingungen wenig Neigung Ag⁺-Ionen freizusetzen. Deshalb bedarf es zur Freisetzung relativ hoher Konzentrationen und/oder großer Oberflächen. Silbersalze hingegen stellen in Gegenwart von Wasser relativ leicht Ionen zur Verfügung. Beiden Einsatzmöglichkeiten haftet jedoch die Eigenschaft an, dass Silberionen sowohl fotochemisch als auch katalytisch recht aktiv sind, was einerseits zu der aus der Photochemie bekannten Schwärzung führt und andererseits die antimikrobielle Wirkung des Silbers blockiert. Verursacht wird dies durch die Bildung von Silberoxid, oder bei Gegenwart von Schwefel durch Bildung des Silbersulfides. Auch eine direkte Verarbeitung von ungeschütztem Silber in chemischen und Temperatur-exponierten Prozessen, wie z. B. thermoplastischen Verformungen einschließlich des Spinnens, kann zu einem Problem werden.

Ein eleganter technischer Ausweg besteht darin, das Silber in eine Matrix einzubauen, in der es einerseits geschützt Verarbeitungsprozesse thermischer und chemischer Natur übersteht, ohne dabei zerstört, gelöst oder verbraucht zu werden, und in der es andererseits nach der Verarbeitung im jeweiligen Substrat weiter zur Verfügung steht. Mit dem Einbau von Silber als Salz, Oxid, elementares Silber oder in anderer Form (z. B. Legierung) in eine Matrix oder z.B. einen Ionentauscher kann das Silber vor temporären äußeren Einflüssen geschützt werden. Dabei wird das Silber je nach Prozess vollständig eingebaut, mehr oder weniger eingebaut oder an der Oberfläche des Trägers fixiert. Dazu bestehen verschiedene Technologien, die z.B. auf folgenden Trägermaterialien basieren: Glas und bioaktives Glas mit verschiedenen Zusammensetzungen, sowohl Silikatglas bis völlig silikatfrei, oder Phosphatglas mit verschiedenen Anteilen anderer Elemente, Glas und Glas-keramisches Trägermaterial, Zeolithe, Zirkoniumphosphat, Titandioxid, Quarz als Siliziumdioxid, und weitere anorganische Materialien. Alle diese mit Silber dotierten Trägermaterialien besitzen den Vorteil einer hohen thermischen Stabilität und können somit direkt in eine (z.B. polymere) Masse vor dem Spinnen, Extrudieren oder Spritzen eingebracht werden.

Dabei besitzen alle diese Trägermaterialien, ungeachtet ob mit kristalliner oder amorpher Struktur, jedoch den Nachteil, eine mehr oder wenig große Abrasion aufzuweisen. Selbst wenn die Abrasion vergleichsweise gering ist, tritt bei der Verarbeitung der bekannten, zum Teil oben bereits beschriebenen Trägermaterialien, eine negative Beeinflussung der Verarbeitung auf.

Um die Nachteile der rein oberflächlichen Anwendung von Silber, Silberoxid, Silberionen bzw. anderer anorganischer Biozide zu vermeiden, werden z.B. Silber, Silberoxid und/oder Silberionen bzw. anorganische Biozide in partikuläre Trägermaterialien, also Matrices wie zum Beispiel Gläser eingefügt. Diese nachfolgend "Biozid-Komposit" genannten Systeme schützen den darin vorliegenden bioziden Wirkstoff, insbesondere aufgrund ihrer Temperaturbeständigkeit, und ermöglichen eine Verarbeitung auch in geschmolzenen Polymeren. Die durch Trockenvermahlung hergestellten Biozid-Kompositpartikel sind jedoch meistens scharfkantig und neigen bei der Weiterverarbeitung, insbesondere bei der Einarbeitung in die Polymere, zur Agglomeration.

Die daraus hergestellten Formkörper oder Textilfasern sind äusserst abrasiv. Die abrasive Eigenschaft führt beim Einsatz dieser Materialien in Fasern zu einem erhöhten Verschleiss bei der Verspinnung z.B. an Fadenführern und Leiteinrichtungen der Verspinnungsanlage und macht einen industriellen Einsatz in diesem Bereich unmöglich. Darüber hinaus führt eine Reagglomeration bei der Fadenherstellung zu hohen Druckfilterwerten, was nicht nur die Verarbeitung erschwert oder unmöglich macht, sondern auch die Festigkeit der so hergestellten Fäden stark beeinträchtigt.

Die Konservierung mittels Silber hat unter anderem auch den Effekt, dass Silberverbindungen, insbesondere in Gegenwart von reduzierenden Verbindungen und bei Lichteinfluss, zu unerwünschten Verfärbungen führen können. Durch den Einsatz höherer Silber-Konzentrationen wird das Risiko einer Verfärbung verstärkt, was gerade im Bereich der Ausrüstung von Fasern und Textilien nachteilig ist. Eine vorzeitige unerwünschte Freisetzung von Silber kann jedoch verhindert werden, indem das Silber oder die Silberverbindungen in Trägermaterialien, wie z.B. Kieselsäuren, Titandioxid, Zirkoniumphosphat, Zeolithen oder Glas eingebettet werden.

Beispiele für gängige Einsatzgebiete von Silber als antimikrobielles Agens sind Beschichtungen für Haushaltsgeräte, der Bereich der Medizin und der Pharmazie sowie die Wasserbehandlung. Auch im Bereich der technischen Konservierung, z.B. bei Klebstoffen, Dichtstoffen, Beschichtungsstoffen und Kunststoffen, ist Silber als Biozid-Komponente bekannt.

In DE-A 103 46 387 wird beispielsweise Silber als mögliches Konservierungsmittel genannt.

In diesem Dokument wird der Einsatz von Silber-haltigen Zubereitungen zur antimikrobiellen Ausrüstung von harten und weichen Oberflächen beschrieben. Auch wird der Einsatz von Silberionen oder Silber auf Trägern, in Lösungen und Dispersionen für die Behandlung von Textilien und anderen Materialien beschrieben.

In US 6,831,028 werden zur Erzeugung von antimikrobiellen Gläsern mehrstufige Trockenmahlprozesse beschrieben, bei denen z. B. Teilchengrößen von 0,1 bis 300 Mikrometer erzeugt werden. Die Produkte dieses auf Silber-haltige Glaspartikel angewandten Trockenmahlverfahrens sind für eine antimikrobielle Ausrüstung über das Spinnverfahren in der Spinnmasse verwendbar, vornehmlich für die Herstellung von PES-, PA- aller Typen, PP-und andere Polyolefine, Aramid-Endlosfilamente und Stapelfasern. Sie verursachen jedoch bei Spinnen, Strecken, Texturieren und der weiteren Verarbeitung einen erhöhten Verschleiß von Fadenführern und Fadenleitelementen. Dieser Verschleiß wiederum führt zu einer Beschädigung der genannten Fadenleitelemente, die wiederum Fibrillen oder Fadenbrüche verursachen.

In JP 71-18 925 werden Tenside zur Verringerung der Abrasivität von Zeolithen vorgeschlagen. Diese Kombination kann jedoch nur eine gewisse Glättung des Fadenlaufes bewirken, aber nicht die oben beschriebenen technischen Probleme zufriedenstellend lösen.

In JP 62-210098A (1987) werden Bor-haltige Gläser mit einem Gehalt von etwa 1 Gew.-% an Silberoxid beschrieben, die eine antimikrobielle Wirkung aufweisen.

In JP 01-313531A (1989) werden Silberoxid-haltige Silikat/Borat-Gläser mit einer antimikrobiellen Wirkung einer synthetischen Harzzusammensetzung beigefügt. Es treten jedoch Schwierigkeiten mit der Transparenz der Materialien und der Mischbarkeit der Komponenten auf.

Als Trägermaterialien für die biozide Wirkstoffkomponente sind verschiedene Gerüststoffe geeignet, beispielsweise Zeolithe. Daneben können auch poröse Stoffe wie Kieselsäuren, beispielsweise pyrogene Kieselsäuren, Bentonite, polymere Materialien oder Diatomeenerde ("Kieselgur") als Trägermaterialien dienen, ferner keramische, zum lonenaustausch befähigte Materialien, beispielsweise auf der Basis von Zirkoniumphosphat, oder auch Gläser, beispielsweise die in der oben beschriebenen US 6,831,028 beschriebenen Gläser.

Der vorliegenden Erfindung liegt als eine Aufgabe zugrunde, eine biozide Mischung bereitzustellen, die sich für die Herstellung von Gebrauchsgegenständen wie Formkörpern oder Textilfasern eignet, die zuvor beschrieben Nachteile des Standes der Technik nicht aufweist und eine lange anhaltende biozide Wirkung an der Oberfläche des Gebrauchsgegenstands entfaltet.

Diese Aufgabe wird durch eine biozide Mischung gelöst, die Biozid-Kompositpartikel, d.h. anorganische Trägerpartikel mit einer bioziden Wirkstoffkomponente und gegebenenfalls ein Bindemittel aufweist.

Eine Ausführungsform der Erfindung ist dadurch gekennzeichnet, dass die Biozid-Kompositpartikel Metallionen (z.B. Silberionen) freisetzen, die aus der Kompositmatrix der Biozid-Kompositpartikel austreten können. Als Bindemittel in den Kompositpartikeln kann z.B. ein zyklisches Oligomer eingesetzt werden.

Eine weitere Ausführungsform der Erfindung ist dadurch gekennzeichnet, dass die Metallionen Silberionen und/oder Kupferionen sind.

Eine weitere Ausführungsform der Erfindung ist dadurch gekennzeichnet, dass die Biozid-Kompositpartikel kleiner als 5 µm sind. Dies kann durch den Einsatz fein gemahlener Partikel erreicht werden.

Eine weitere Ausführungsform der Erfindung ist dadurch gekennzeichnet, dass die Biozid-Kompositpartikel kleiner als 1 µm sind.

Eine weitere Ausführungsform der Erfindung ist dadurch gekennzeichnet, dass das eingesetzte Bindemittel ein zyklisches Ester-Oligomer ist.

Eine weitere Ausführungsform der Erfindung ist dadurch gekennzeichnet, dass das Bindemittel ein makrozyklisches Ester-Oligomer ist, das in seiner Molekülstruktur mindestens einen Ring besitzt, der durch fünf oder mehr kovalent gebundene Atome gebildet ist.

Eine weitere Ausführungsform der Erfindung ist dadurch gekennzeichnet, dass die biozide Mischung bzw. die biozide Wirkstoffkomponente nur das Bindemittel und die Biozid-Kompositpartikel enthält.

Eine weitere Ausführungsform der Erfindung ist eine Mischung, welche ausserdem ein Polymer aufweist.

Eine weitere Ausführungsform der Erfindung ist dadurch gekennzeichnet, dass das Polymer aus der Gruppe Polyester, Polyamid, Polyolefin, Polyacrylat, Polyvinylchlorid und Polyurethan ausgewählt ist.

Eine weitere Ausführungsform der Erfindung ist dadurch gekennzeichnet, dass der Anteil des Polymers grösser als 50 Gew.-% (bezogen auf die gesamte Mischung) ist.

Eine weitere Ausführungsform der Erfindung ist dadurch gekennzeichnet, dass der Anteil des Polymers grösser als 60 Gew.-% ist.

Eine weitere Ausführungsform der Erfindung ist dadurch gekennzeichnet, dass die biozide Mischung als Schüttgut, insbesondere als Pulver oder Granulat, vorliegt. Eine weitere Ausführungsform der Erfindung ist dadurch gekennzeichnet, dass sie als Fluid, insbesondere als Paste oder als dicke Flüssigkeit, vorliegt. Eine weitere Ausführungsform der Erfindung ist dadurch gekennzeichnet, dass sie eine Flüssigkeit, wie Lösungsmittel oder Weichmacher, aufweist.

Gegenstand der Erfindung ist auch ein Verfahren zur Herstellung einer bioziden Mischung, welches die folgenden Schritte aufweist:
a) Zerkleinern eines Biozid-Komposits durch Scherung und/oder Prallung zu Biozid-Kompositpartikeln;
b) Dispergieren der Biozid-Kompositpartikel in einer Flüssigkeit zu einer Biozid-Kompositpartikel-Suspension;
c) Vermischen der Bizid-Kompositpartikel-Suspension mit einer ein zyklisches Oligomer aufweisenden Bindemittel-Lösung zu einer Mischung bestehend aus Bindemittel-Lösung und darin dispergierten bioziden Biozid-Kompositpartikeln;
d) Aufkonzentrieren der Mischung durch Entfernen mindestens eines Teils der Flüssigkeit.

Die Erfindung betrifft auch ein Verfahren, das dadurch gekennzeichnet ist, dass die Schritte a) und b) durch Nassvermahlung in einer Mühle mit Mahlhilfskörpern durchgeführt werden.

Die Erfindung betrifft auch ein Verfahren, das dadurch gekennzeichnet, dass die Schritte a) und b) in einer Rührwerkskugelmühle erfolgen, deren Prozessraum zumindest teilweise mit der Flüssigkeit gefüllt ist.

Die Erfindung betrifft auch ein Verfahren, das dadurch gekennzeichnet, dass die Schritte a) und b) in einem Dreiwalzwerk durchgeführt werden.

Die Erfindung betrifft auch ein Verfahren, bei dem die in Schritt a) erzeugten Biozid-Kompositpartikel auf Grössen unter 5 µm vermahlen werden.

Die Erfindung betrifft auch ein Verfahren, bei dem die in Schritt a) erzeugten Biozid-Kompositpartikel auf Grössen unter 1 µm vermahlen werden.

Die Erfindung betrifft auch ein Verfahren, bei dem die Schritte a), b) und c) durch Nassvermahlung in einer Mühle mit Mahlhilfskörpern durchgeführt werden.

Die Erfindung betrifft auch ein Verfahren, bei dem die Schritte a), b) und c) in einer Rührwerkskugelmühle erfolgen, deren Prozessraum zumindest teilweise mit Flüssigkeit gefüllt ist.

Die Erfindung betrifft auch ein Verfahren, bei dem in Schritt a) als Ausgangsmaterial vorzerkleinertes Biozid-Komposit verwendet wird.

Die Erfindung betrifft auch ein Verfahren, bei dem als Bindemittel ein zyklisches Ester-Oligomer verwendet wird.

Die Erfindung betrifft auch ein Verfahren, bei dem als Bindemittel ein makrozyklisches Ester-Oligomer verwendet wird, das in seiner Molekülstruktur mindestens einen Ring besitzt, der durch fünf oder mehr kovalent gebundene Atome gebildet ist.

Die Erfindung betrifft auch ein Verfahren, bei dem als Flüssigkeit, wie Lösungsmittel oder Weichmacher, ein inertes organisches Lösungsmittel wie Butylacetat, MEK, MIBK, Toluol oder Xylol verwendet wird.

Die Erfindung betrifft auch ein Verfahren. zur Herstellung eines bioziden Polymers durch Vermischen (Compoundieren) eines Polymers mit einer bioziden Mischung.

Die Erfindung betrifft auch ein Verfahren, bei dem das Polymer ein Polyester ist.

Die Erfindung betrifft auch ein Verfahren, bei dem das Vermischen (Compoundieren) in einem Mischer, einer Presse, einem Extruder oder Kombinationen dieser erfolgt.

Die Erfindung betrifft auch ein Verfahren, bei dem das fertige Polymer zu einem Schüttgut, insbesondere Pulver oder Granulat, verarbeitet wird.

Gegenstand der vorliegenden Erfindung ist auch ein biozid ausgerüstetes Polymer, insbesondere hergestellt mittels eines Verfahrens wie oben beschrieben, welches Biozid-Kompositpartikel, ein zyklisches Oligomer und ein Polymer aufweist.

Die Erfindung betrifft auch ein Polymer, das dadurch gekennzeichnet ist, dass die Biozid-Kompositpartikel Metallionen freisetzen, die aus der Kompositmatrix der Biozid-Kompositpartikel austreten können.

Die Erfindung betrifft auch ein Polymer, das dadurch gekennzeichnet ist, dass die Metallionen Silberionen und/oder Kupferionen sind. Die Erfindung betrifft auch ein Polymer, das dadurch gekennzeichnet ist, dass die Biozid-Kompositpartikel kleiner als 5 µm sind. Die Erfindung betrifft auch ein Polymer, das dadurch gekennzeichnet ist, dass Biozid-Kompositpartikel kleiner als 1 µm sind.

Die Erfindung betrifft auch ein Polymer, das dadurch gekennzeichnet ist, dass der Anteil an Biozid-Komposit im Bereich von 0,1 Gew.-% bis 30 Gew.-% liegt.

Die Erfindung betrifft auch ein Polymer, das dadurch gekennzeichnet ist, dass es als Komponente ein zyklisches Ester-Oligomer aufweist.

Die Erfindung betrifft auch ein Polymer, das dadurch gekennzeichnet ist, dass es ein makrozyklisches Ester-Oligomer aufweist, das in seiner Molekülstruktur mindestens einen Ring besitzt, der durch fünf oder mehr kovalent gebundene Atome gebildet ist.

Ferner betrifft die vorliegende Erfindung auch die Verwendung des bioziden Polymers zur Herstellung von Formkörpern, insbesondere zur Herstellung von Preforms durch Spritzgiessen oder zur Herstellung von Flaschen durch Streckblasformen.

Ferner betrifft die vorliegende Erfindung die Verwendung des bioziden Polymers zur Herstellung von Fasern, insbesondere zur Herstellung von Textilfasern mittels Spinnverfahren.

Der erfindungsgemässe Einsatz von Biozid-Kompositpartikeln, die in einem Polymer dispergiert sind, gewährleistet eine nachhaltige biozide Wirkung an der Polymeroberfläche, da die Biozid-Komposite in der Polymermatrix fest eingebunden sind, so dass auch bei einer Abnutzung der Polymeroberfläche stets biozide Kompositpartikel exponiert und biozid wirksam sind.

Die erfindungsgemässe biozide Mischung weist vorzugsweise ein zyklisches Oligomer als Bindemittel sowie Biozid-Kompositpartikel auf, wobei die Biozid-Kompositpartikel vorzugsweise Metallionen freisetzen, die aus der Matrix der Biozid-Komposite austreten können. Eine besonders starke biozide Wirkung erhält man, wenn die Metallionen Silberionen und/oder Kuperionen sind.

Biozid-Komposite sind im allgemeinen im Handel erhältlich wie z.B. Alphasan® der Firma Milliken & Company (USA), Sanitzed Silber® BC A 21-41, BC A 21-51, BC A 21-61 der Firma SANITIZED AG (Schweiz), Ionpure® von Ishizuka Glass (Japan), Zeomic® bzw. AgIon® der Firma Sinanen (USA), Microfree® der Firma Dupont oder Jmac (der Firma Johnson Mathey).

Die Matrix der Biozid-Komposite besteht z.B. aus Glas, Keramik, Glaskeramik, Polymer oder Mischungen dieser Materialien. Die biozide Komponente der Biozid-Komposite kann im Prinzip aus jedem beliebigen bioziden Material bestehen, das aus der Matrix freigesetzt wird. Bevorzugt handelt es sich dabei um Schwermetalle in ionischer und elementarer Form sowie deren Legierungen. Besonders bevorzugt handelt es sich um Silber und/oder Kupfer in ionischer und elementarer Form sowie deren Legierungen.

Die biozide Mischung kann als Schüttgut, insbesondere als Pulver oder Granulat, bereitgestellt werden. Der Anteil an Biozid-Komposit beträgt 1 Gew.-% bis 99 Gew.-%., bevorzugt 50 Gew.-% bis 97 Gew.-%, besonders bevorzugt 60 Gew.-% bis 85 Gew.-% in der bioziden Mischung. Neben den Biozid-Kompositpartikeln können auch andere organische und/oder anorganische Teilchen oder Stoffe in der bioziden Mischung enthalten sein. Dabei kann es sich sowohl um sogenannte Nano- als auch um Mikro-Teilchen handeln.

Bei den Teilchen handelt es sich um feste Partikel bzw. Feststoffteilchen aus jedem beliebigen geeigneten Material. Im Folgenden werden die Ausdrücke Teilchen und Partikel miteinander austauschbar verwendet. Es kann sich z.B. um organische, auch polymere, z.B. aus Kunststoff, oder anorganische Teilchen handeln, wobei anorganische Partikel bevorzugt sind. Beispiele für organische Teilchen sind Dendrimere, Glukane oder Cyclodextrine, die gegebenenfalls Metallatome in komplexierter Form beinhalten. Beispiele für anorganische Teilchen sind Partikel aus einem Element, einer Legierung oder einer Elementverbindung. Die anorganischen Partikel bestehen vorzugsweise aus Verbindungen von Metallen oder Halbmetallen, wie z.B. Si oder Ge, oder Bor, besonders bevorzugt aus Metall- oder Halbmetalloxiden, einschliesslich hydratisierten Oxiden, Oxid-Hydroxiden oder Hydroxiden.

Beispiele für Teilchen aus einem Element sind Partikel aus Kohlenstoff, wie Russ oder Aktivkohle, aus einem Halbmetall, wie Silicium (einschliesslich technischem Si, Ferrosilicium und Reinsilicium) oder Germanium, oder einem Metall, wie z.B. Eisen (auch Stahl), Chrom, Zinn, Kupfer, Aluminium, Titan, Gold und Zink. Beispiele für Teilchen aus einer Legierung können Partikel aus Bronze oder Messing sein.

Beispiele für die bevorzugten Metallverbindungen und Verbindungen von Halbleiterelementen oder Bor sind gegebenenfalls hydratisierte Oxide, wie ZnO, CdO, Si02, Ge02, Ti02, Zr02, Ce02, Sn02, Al2O3 (in allen Modifikationen, insbesondere als Korund, Böhmit, AlO(OH), auch als Aluminiumhydroxid), In2O3, La2O3, Fe2O3, Cu20, Ta2O5, Nb2O5, V2O5, MoO3 oder W03, entsprechende Mischoxide, z.B. Indium-Zinn-Oxid (ITO), Antimon-Zinn-Oxid (ATO), fluor-dotiertes Zinnoxid (FTO) und solche mit Perowskitstruktur, wie BaTi03 und PbTi03, Chalkogenide, wie beispielsweise Sulfide (z.B. CdS, ZnS, PbS und Ag2S), Selenide (z.B. GaSe, CdSe und ZnSe) und Telluride (z.B. ZnTe oder CdTe), Halogenide, wie AgCl, AgBr, AgI, CuCl, CuBr, CdI2 und PbI2, Carbide, wie CdC2 oder SiC, Silicide, wie MoSi2, Arsenide, wie AlAs, GaAs und GeAs, Antimonide, wie InSb, Nitride, wie BN, AlN, Si3N4 und Ti3N4, Phosphide, wie GaP, InP, Zn3P2 und Cd3P2, sowie Carbonate, Sulfate, Phosphate, Silicate, Zirconate, Aluminate und Stannate von Elementen, insbesondere von Metallen oder Si, z.B. Carbonate von Calcium und/oder Magnesium, Silicate, wie Alkalisilicate, Talkum, Tone (Kaolin) oder Glimmer, und Sulfa-te von Barium oder Calcium. Weitere Beispiele für zweckmässige Teilchen sind ferner Magnetit, Maghemit, Spinelle (z.B. MgO•Al2O3), Mullit, Eskolait, Tialit, SiO2•TiO2, oder Biokeramiken, z.B. Calciumphosphat und Hydroxyapatit. Es kann sich um Teilchen aus Glas oder Keramik handeln.

Es kann sich dabei z.B. um Partikel handeln, die gewöhnlich für die Herstellung von Glas (z. B. Borosilicatglas, Natronkalkglas oder Kieselglas), Glaskeramik oder Keramik (z.B. auf Basis der Oxide Si02, BeO, Al2O3, Zr02 oder MgO oder der entsprechenden Mischoxide, Elektro- und Magnetokeramik, wie Titanate und Ferrite, oder Nichtoxidkeramiken, wie Siliciumnitrid, Siliciumcarbid, Bornitrid oder Borcarbid) verwendet werden. Es kann sich auch um Partikel handeln, die als Füllstoffe oder Pigmente dienen. Technisch wichtige Füllstoffe sind z.B. Füllstoffe auf Basis von Si02, wie Quarz, Cristobalit, Tripolit, Novaculit, Kieselgur, Kieselerde, pyrogene Kieselsäuren, Fällungskieselsäuren und Kieselgele, Silicate, wie Talkum, Pyrophyllit, Kaolin, Glimmer, Muskovit, Phlogopit, Vermiculit, Wollastonit und Perlite, Carbonate, wie Calcite, Dolomite, Kreide und synthe-tische Calciumcarbonate, Russ, Sulfate, wie Schwerspat und Leichtspat, Eisenglimmer, Gläser, Aluminiumhydroxide, Aluminiumoxide und Titandioxid, und Zeolithe. Es können auch Mischungen dieser Partikel verwendet werden.

Typische Materialien für die Partikel können z.B. mindestens ein Element ausgewählt aus C, N,O, S, B, Si, Al, Ti, Zr, Zn, Fe, Ag und Cu umfassen. Bevorzugt sind gegebenenfalls hydratisierte Siliciumoxide und Metalloxide, einschliesslich Oxidhydroxide und Hydroxide, wie Vanadium-, Eisen-, Wolfram-, Titan-, Aluminium- oder Zinkoxide oder Mischungen davon.

Die Herstellung solcher Teilchen ist bekannt. Beispiele für Verfahren zur Herstellung von Teilchen sind Flammpyrolyse, Plasmaverfahren, Gasphasenkondensationsverfahren, Kolloidtechniken, Präzipitationsverfahren, Sol-Gel-Prozesse, kontrollierte Nukleations-und Wachstumsprozesse, MOCVD-Verfahren und (Mikro)emulsionsverfahren. Diese Verfahren sind in der Literatur ausführlich beschrieben.

Die verwendbaren Teilchen sind im Allgemeinen im Handel erhältlich. Beispiele für Si02-Teilchen sind handelsübliche Kieselsäureprodukte, z.B. Kieselsole, wie die Levasile®, (Kieselsole der Bayer AG), oder pyrogene Kieselsäuren, z.B. die Aerosil®-Produkte (von Degussa GmbH). Selbstverständlich können auch alle als Füllstoffe eingesetzten Teilchen verwendet werden. Bei den eingesetzten Teilchen kann es sich z.B. um Nanopartikel oder Mikropartikel handeln. Die eingesetzten Teilchen und Füllstoffe können auch oberflächenfunktionalisiert bzw. oberflächenmodifiziert sein. Im Folgenden werden die Ausdrücke "oberflächenfunktionalisiert" und "oberflächenmodifiziert" miteinander austauschbar verwendet.

Die Oberflächenmodifizierung von Teilchen und Füllstoffen mit bestimmten Gruppen, um die Teilchen mit einer oder mehreren zusätzlichen Funktionen zu versehen, ist dem Fachmann vertraut und er kann solche oberflächenmodifizierten Teilchen ohne weiteres herstellen oder gegebenenfalls im Handel erwerben. Oberflächenmodifizierte Teilchen werden im allgemeinen durch Umsetzung der Teilchen mit geeigneten Oberflächenmodifizierungsmitteln erhalten, wobei die Zugabe des Oberflächenmodifizierungsmittels auch in situ während der Herstellung der Teilchen erfolgen kann. Die Umsetzung erfolgt unter solchen Bedingungen, dass eine Anbindung des Modifizierungsmittels, z.B. durch chemische Bindung oder Wechselwirkung auf der Oberfläche der Teilchen erfolgt. Die Bedingungen hängen naturgemäss von der Art der Teilchen und der Oberflächenmodifizierungsmittel ab. Es kann ein einfaches Rühren bei Raumtemperatur ausreichen, gegebenenfalls ist aber auch ein Energieeintrag, z.B. durch Erwärmen notwendig. Der Belegungsgrad der Teilchenoberflächen mit den Modifizierungsmitteln kann z.B. durch das eingesetzte Mengenverhältnis der Edukte gesteuert werden.

Dem Fachmann ist bekannt, dass sich auf der Oberfläche von Teilchen in der Regel Gruppen befinden, wobei es sich bei diesen Oberflächengruppen um funktionelle Gruppen handeln kann, die im allgemeinen relativ reaktionsfähig sind. Beispielsweise befinden sich auf der Oberfläche von Teilchen Restvalenzen, wie Hydroxygruppen und Oxygruppen, z.B. bei Metalloxidpartikeln, oder Thiolgruppen und Thiogruppen, z.B. bei Metallsulfiden, oder Amino-, Amid- und Imidgruppen, z.B. bei Nitriden.

Das Oberflächenmodifizierungsmittel weist zum einen mindestens eine funktionelle Gruppe, die mit auf der Oberfläche der Teilchen vorhandenen reaktionsfähigen Gruppen unter Anbindung chemisch reagieren oder wechselwirken kann, und zum anderen mindestens eine weitere funktionelle Gruppe auf. Die Anbindung kann durch chemische Bindung, wie kovalente, einschliesslich koordinative Bindungen (Komplexe), oder ionische (salzartige) Bindungen der funktionellen Gruppe mit den Oberflächengruppen der Teilchen erfolgen, während als Wechselwirkungen beispielhaft Dipol-Dipol-Wechselwirkungen, polare Wechselwirkungen, Wasserstoffbrückenbindungen und vander-Waals-Wechselwirkungen zu nennen sind. Bevorzugt ist die Ausbildung einer chemischen Bindung. So kann zwischen den funktionellen Gruppen des Modifizierungsmittels und dem Partikel z.B. eine Säure/Base-Reaktion, eine Komplexbildung oder eine Veresterung stattfinden. Solche Oberflächenmodifizierungsmittel sind dem Fachmann bekannt, und er kann ohne weiteres diejenigen auswählen, die für das jeweilige Teilchen geeignet sind.

Bei der funktionellen Gruppe, die das Oberflächenmodifizierungsmittel umfasst, handelt es sich z.B. um Carbonsäuregruppen, Säurechloridgruppen, Estergruppen, Nitril- und Isonitrilgruppen, OH-Gruppen, Alkylhalogenidgruppen, SH-Gruppen, Epoxidgruppen, Anhydridgruppen, Säureamidgruppen, primäre, sekundäre und tertiäre Aminogruppen, Si-OH-Gruppen bzw. hydrolysierbare Reste von Silanen (nachstehend erläuterte Gruppen Si-X) oder C-H-acide Gruppierungen, wie β-Dicarbonylverbindungen. Das Modifizierungsmittel kann auch mehr als eine derartige funktionelle Gruppe umfassen, wie z.B. in Aminosäuren oder EDTA.

Beispiele für geeignete Oberflächenmodifizierungsmittel sind demgemäß Mono- und Polycarbonsäuren, entsprechende Säureanhydride, Säurechloride, Ester und Säureamide, Alkohole, Alkylhalogenide, Aminosäuren, Imine, Nitrile, Isonitrile, Epoxyverbindungen, Mono- und Polyamine, Dicarbonylverbindungen, Silane und Metallverbindungen, die über eine funktionelle Gruppe verfügen, die mit den Oberflächengruppen der Partikel reagieren kann. Besonders bevorzugt eingesetzte Modifizierungsmittel sind Silane, Phosphorsäuren, Phoshorsäurederivate, Carbonsäuren, Carbonsäurederivate, wie Säureanhydride und Säurehalogenide, insbesondere Säurechloride, Alkohole, Alkylhalogenide, wie Alkylchloride, Alkylbromide und Alkyliodide, wobei der Alkylrest gegebenenfalls substituiert ist, insbesondere mit Fluor. Es können ein oder mehrere Modifizierungsmittel verwendet werden.

Bevorzugte Oberflächenmodifizierungsmittel sind hydrolysierbare Silane mit mindestens einer nicht hydrolysierbaren Gruppe. Dabei handelt es sich besonders bevorzugt um hydrolysierbare Silane, die mindestens eine nicht-hydrolysierbare Gruppe aufweisen. Geeignete hydrolysierbare Silane mit hydrophober und/oder oleophober Gruppe besitzen z.B. die allgemeine Formel RₐSiX₍₄₋ₐ₎ (I),

worin R gleich oder verschieden ist und einen nicht-hydrolysierbaren Rest darstellt, wobei mindestens eine Gruppe R eine hydrophobe und/oder oleophobe Gruppe ist, X eine hydrolysierbare Gruppe oder OH ist und a den Wert 1, 2 oder 3, vorzugsweise 1 oder 2, hat.

Die hydrolysierbare Gruppe X ist z.B. Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen in der bzw. den Alkylgruppe(n).

Der nicht-hydrolysierbare Rest R ist z.B. Alkyl-, wie z.B. Methyl, Ethyl, n-Propyl, Isopropyl, n-Butyl, s-Butyl und t-Butyl, Pentyl, Hexyl oder Cyclohexyl Alkenyl-, wie z.B. Vinyl, 1-Propenyl, 2-Propenyl und Butenyl, Vinyl- oder Allyl-, Epoxy-, Hydroxy-, Ether-, Amino-, Monoalkylamino-, Dialkylamino-, gegebenenfalls substituierte Anilino-, Amid-, Carboxy-, Acryl-, Acryloxy-, Methacrylat-, Methacryloxy-, Silyl-, Mercapto-, Cyano-, Alkoxy-, Isocyanato-, Aldehyd-, Alkylcarbonyl-, Säureanhydrid- und Phosphorsäuregruppen

Beispiele für entsprechende Silane sind γ-Glycidyloxypropyltrimethoxysilan (GPTS), γ-Glycidyloxypropyltriethoxysilan (GPTES), 3-Aminopropyltrimethoxysilan (APTS), 3-(Meth)acryloxypropyltriethoxysilan oder 3-(Meth)acryloxypropyltrimethoxysilan. Weitere konkrete Beispiele für Oberflächenmodifizierungsmittel, die zur Einführung zusätzlicher Gruppen eingesetzt werden können, sind gesättigte oder ungesättigte Mono- und Polycarbonsäuren, wie z.B. Ameisensäure, Acrylsäure, Methacrylsäure oder Crotonsäure, Mono- und Polyamine, wie Methylamin, oder Ethylendiamin, -Dicarbonylverbindungen, wie Acetylaceton, oder Aminosäuren.

Das Oberflächenmodifizierungsmittel weist bevorzugt ein Molekulargewicht von nicht mehr als 1.500 und bevorzugter nicht mehr als 1.000 auf, es können aber auch Modifizierungsmittel mit höherem Molekulargewicht verwendet werden.

Die erfindungsgemässe Herstellung des bioziden Polymers erfolgt durch Vermischen (Compoundieren) eines Polymers mit der erfindungsgemässen bioziden Mischung. Das fertige Polymer kann ebenfalls zu einem Schüttgut, insbesondere Pulver oder Granulat, verarbeitet werden.

Das Vorliegen der bioziden Mischung als Schüttgut erleichtert deren Vermischen (Compoundieren) mit einem Polymer.

Vorzugsweise sind die Biozid-Kompositpartikel kleiner als 5 µm. Dies gewährleistet ein ausreichend großes Oberfläche/Volumen-Verhältnis für das in dem Polymer dispergierte biozide Glasmaterial.

Der Anteil an Biozid-Kompositpartikeln beträgt zwischen 0,1 Gew.-% und 30 Gew.-%., bevorzugt zwischen 0,2 Gew.-% und 25 Gew.-%. und besonders bevorzugt zwischen 0,5 Gew.-% und 20 Gew.-% im bioziden Polymer.

Bei einer besonders vorteilhaften Ausführung der Erfindung sind Biozid-Kompositpartikel kleiner als 1 µm. Dadurch erhält man ein noch größeres Oberfläche/Volumen-Verhältnis und somit eine hohe Wirksamkeit des Komposits, so dass auch schon ein Anteil an Biozid-Kompositpartikeln von 1 Gew.-% bis 3 Gew.-% ausreichend ist.

Wenn die Biozid-Kompositpartikel kleiner als 1 µm sind, erhält man erfindungsgemässe biozide Polymere mit einer besonders glatten Oberfläche. Dies ist bei Gebrauchsgegenständen, Formkörpern und dergleichen eine angenehme Eigenschaft. Bei Verwendung der erfindungsgemässen bioziden Polymere zur Verspinnung zu Textilfasern ergeben sich noch zwei weitere Vorteile. Einerseits führen die kleinen biozid-Kompositpartikel zu einer nur geringen Schwächung der Zugfestigkeit solcher Textilfasern. Andererseits ergibt sich eine nur geringe Abrasion der Fadenführungen in einer Spinnerei.

Da die erfindungsgemässe biozide Mischung bevorzugt als Bindemittel ein zyklisches Oligomer aufweist, kann bei seiner Herstellung die Bildung von Glaspartikel-Agglomeraten wirksam verhindert werden. Bei einer besonders bevorzugten Ausführung der bioziden Mischung ist das Bindemittel ein zyklisches Ester-Oligomer. Besonders vorteilhaft zur Verhinderung von Partikel-Agglomeraten ist es, wenn das Bindemittel ein makrozyklisches Ester-Oligomer ist, das in seiner Molekülstruktur mindestens einen Ring besitzt, der durch fünf oder mehr kovalent gebundene Atome gebildet ist. Vorzugsweise enthält die erfindungsgemässe biozide Mischung nur das Bindemittel und die bioziden Glaspartikel.

Das erfindungsgemässe Verfahren zur Herstellung einer bioziden Mischung weist die folgenden Schritte auf:
a) Zerkleinern eines Biozid-Komposits durch Scherung und/oder Prallung zu Biozid-Kompositpartikeln;
b) Dispergieren der Biozid-Kompositpartikel in einer Flüssigkeit zu einer Biozid-Kompositpartikel-Suspension;
c) Vermischen der Glaspartikel-Suspension mit einer Bindemittel-Lösung zu einer Mischung bestehend aus Bindemittel-Lösung und darin dispergierten Biozid-Kompositpartikeln; und
d) Aufkonzentrieren der Mischung durch Entfernen mindestens eines Teils der Flüssigkeit.

Durch die Anwesenheit des weiter oben beschriebenen Bindemittels wird beim Aufkonzentrieren (Schritt d) eine Agglomeration der zuvor (Schritt a) zerkleinerten Biozid-Kompositpartikel verhindert. Die Schritte a) und b) werden vorzugsweise durch Nassvermahlung in einer Mühle mit Mahlhilfskörpern durchgeführt. Besonders vorteilhaft ist es dabei, wenn die Schritte a) und b) in einer Rührwerkskugelmühle erfolgen, deren Prozessraum zumindest teilweise mit der in Schritt b) verwendeten Flüssigkeit gefüllt ist. Alternativ können die Schritte a) und b) auch in einem Dreiwalzwerk durchgeführt werden.

Vorzugsweise werden die in Schritt a) erzeugten Biozid-Kompositpartikel auf Größen unter 5 µm und besonders bevorzugt auf Größen unter 1 µm vermahlen. Zweckmässigerweise werden die Schritte a) und b) und gegebenenfalls der Schritt c) durch Nassvermahlung in einer Mühle mit Mahlhilfskörpern durchgeführt. Vorzugsweise erfolgen die Schritte a), b) und c) in einer Rührwerkskugelmühle, deren Prozessraum zumindest teilweise mit Flüssigkeit gefüllt ist. Zweckmässigerweise verwendet man in Schritt a) als Ausgangsmaterial vorzerkleinerte Biozid-Kompositpartikel. Für die als Lösungsmittel dienende Flüssigkeit wird ein inertes organische Lösemittel, vorzugsweise Butylacetat, MEK, MIBK, Toluol oder Xylol verwendet.

Die Schritte c) und d) können auch unter reduziertem Druck erfolgen.

Das erfindungsgemässe biozide Polymer kann vorteilhaft zur Herstellung von Fasern, insbesondere zur Herstellung von Textilfasern mittels Spinnverfahren, verwendet werden.

Ausserdem kann es zur Herstellung von Formkörpern, insbesondere zur Herstellung von Preforms durch Spritzgiessen oder zur Herstellung von Flaschen durch Streckblasformen, verwendet werden.

Die erfindungsgemäßen Komposit-Teilchen aus einem Trägermaterial und vorzugsweise einer Silberkomponente können gegebenenfalls weitere Inhaltsstoffe aufweisen. Bewährt hat sich beispielsweise der Einsatz von aktivierenden Edelmetallen wie Gold, das die antimikrobielle Wirkung der Silberkomponente aktiviert. Auch möglich ist der Einsatz von Silber in Verbindung mit weiteren bioziden Komponenten in einem Trägermaterial.

Die Herstellverfahren der Komposit-Teilchen können negativ beeinflusst werden, wenn dünne Materialien hergestellt werden, wie z. B. Folien, Blasfolien oder Co-Extrusionsfolien- oder Platten. Das betrifft insbesondere die Oberfläche der Produkte selbst, aber auch die benutzten Werkzeuge sowie die zur weiteren Bearbeitung der hergestellten Produkte wie Thermoforming benutzten Werkzeuge, deren Oberfläche unter der abrasiven Wirkung der bearbeiteten Produkte leidet, abgenutzt wird und selbst unerwünschten Abrieb erzeugt.

Grundsätzlich werden auch andere Verarbeitungsverfahren, die sich lediglich mit der Herstellung kompakter Teile beschäftigen, durch abrasive Teile beeinträchtigt. Eine zu grobe Oberflächenstruktur der antimikrobiellen Ausrüstung kann wie oben beschrieben sowohl die Qualität der Oberfläche der Produkte als auch die Lebensdauer der Werkzeuge beeinträchtigen.

Ein gewisser Teil der Abrasion kann durch die verwendete Korngröße der bioziden bzw. antimikrobiellen Ausrüstung reduziert werden. Dabei verändert die herkömmliche Art der Zerkleinerung zwar die Größe der Teilchen, jedoch nicht die Form der Bruchstücke. Zur Entfaltung der antimikrobiellen Wirkung der Silber- Additive ist ein gewisser Oberflächenkontakt erforderlich.

Falls jedoch die Partikel zu klein sind, kann in Abhängigkeit vom verwendeten Polymer und vom angewandten Verarbeitungsverfahren eine Art Versiegelung der Oberfläche eintreten, die die antimikrobielle Wirkung der Silber- Ionen verhindert. Deshalb kann zu feines Mahlen zwar die Abrasionsprobleme bei der Verarbeitung lindern, jedoch auch dazu beitragen, die antimikrobielle Wirkung des bioziden Wirkstoffs zu verhindern.

Gewöhnlich erfolgt die Aufbereitung der anorganischen antimikrobiellen Partikel nach deren Herstellung aus dem Grobgut durch Zerkleinerung, wie Brechen und stufenweisem Mahlen mit abschließendem Feinmahlen auf die gewünschte oder erreichbare Korngröße. Häufig werden dabei Kugelmühlen verwendet, mit denen eine vergleichsweise exakte durchschnittliche Korngröße eingestellt werden kann. Der dabei angewandte Trockenmahlprozess führt allerdings dazu, dass der Energieeintrag auch zur unspezifischen statistischen Spaltung der Partikel führt, wobei die Partikel eine kantige und grobe Oberflächenstruktur erhalten. Die Vermeidung von scharfkantigen antimikrobiellen Teilchen ist eine weitere Aufgabe der vorliegenden Erfindung.

Die Erfindung betrifft eine biozide Wirkstoffkomponente auf Basis von anorganischen Trägerpartikeln, die eine biozide Komponente enthalten, wobei die anorganischen Trägerpartikel eine runde Gestalt haben.

Die Erfindung betrifft auch eine biozide Wirkstoffkomponente, dadurch gekennzeichnet, dass die anorganischen Trägerpartikel nahezu kugelförmig sind.

Die Erfindung betrifft auch eine biozide Wirkstoffkomponente, dadurch gekennzeichnet, dass die anorganischen Trägerpartikel nahezu kugelförmig sind und einen Durchmesser von 0,01 bis 100 µm aufweisen.

Die Erfindung betrifft auch ein Verfahren zur Herstellung einer bioziden Wirkstoffkomponente, dadurch gekennzeichnet, dass anorganischen Trägerpartikel, in einem Mahlverfahren so gemahlen werden, dass sie eine nahezu kugelförmige Form erhalten.

Die Erfindung betrifft auch eine biozide Zubereitung enthaltend eine biozide Wirkstoffkomponente sowie einen oder mehrere Hilfs- oder Zusatzstoffe.

Die Erfindung betrifft eine Verwendung einer bioziden Wirkstoffkomponente zur Herstellung von biozid ausgerüsteten Gegenständen. Die Erfindung betrifft einen mit einer bioziden Wirkstoffkomponente biozid ausgerüsteten Gegenstand.

Diese Aufgabe wird ferner gelöst durch die Bereitstellung einer bioziden (und als Untergruppe hiervon insbesondere auch einer antimikrobiellen) Wirkstoffkomponente (W) auf Basis von fein gemahlenen anorganischen Trägerpartikeln (T), die vorzugsweise eine Silberkomponente (S) und/oder andere antimikrobielle Komponenten enthalten. Die anorganischen Trägerpartikel (T) sollen dabei vorzugsweise eine annähernd (bzw. nahezu) kugelförmige Form (ohne scharfe Kanten) und eine glatte Oberfläche aufweisen. Die Form lässt sich durch mikroskopische Untersuchungen festellen.

Eine weitere Ausführungsform der Erfindung betrifft eine biozide Wirkstoffkomponente (W), die als fein gemahlene anorganischen Trägerpartikel (T) amorphe Partikel, insbesondere Glaspartikel, mit einer mittleren Teilchengröße von 0.01 bis 100 µm, vorzugsweise von 0.1 bis 30 µm aufweist. Dabei werden Partikel vorzugsweise mit einem Gehalt an Silberkomponente (S) von 0,01 bis 10 Gew.-% eingesetzt.

Eine weitere Ausführungsform der Erfindung betrifft eine biozide oder antimikrobielle Wirkstoffkomponente (W), die als anorganischen Trägerpartikel (T) Glaspartikel mit einer mittleren Teilchengröße von 0.1 bis 30 µm und einem Gehalt an Silberkomponente (S) von 0,1 bis 5 Gew.-% aufweisen.

Als anorganische Trägerpartikel (T) werden gerne Bor-haltige und/oder Phosphat-haltige Glaspartikel eingesetzt, die als Silberkomponente (S) z. B. ein Silberoxid oder ein Silbersalz enthalten. Die Partikel sollten eine glatte Oberfläche aufweisen, wobei diese durch ein Nass-Mahlverfahren erzeugt werden kann, bei dem ein inertes Medium eingesetzt wird.

Die Partikel können auch eine nahezu kugelförmige Form sowie eine glatte Oberfläche aufweisen, was z. B. durch ein Nass-Mahlverfahren mittels einer Kugelmühle oder einem Dreiwalzwerk erzeugt werden kann.

Die Mahlung kann in einem inerten Medium (wie oben beschrieben) erfolgen, das nicht mit dem antimikrobiellen Wirkstoff reagiert. Das inerte Medium sollte den Wirkstoff auch nicht inaktivieren.

Die Erfindung betrifft auch ein Verfahren zur Herstellung einer bioziden oder antimikrobiellen Wirkstoffstoffkomponente (W), das dadurch gekennzeichnet ist, dass anorganische Trägerpartikel (T), die eine Silberkomponente (S) sowie gegebenenfalls weitere antimikrobielle Komponenten enthalten, insbesondere bei Temperaturen von 10 bis 120° C, insbesondere 20 bis 80° C in einem Nass-Mahlverfahren gemahlen werden, bis sie eine glatte Oberfläche aufweisen.

Eine weitere Ausführungsform der Erfindung betrifft ein Verfahren zur Herstellung einer bioziden Wirkstoffstoffkomponente (W), bei dem als anorganisches Trägerpartikel (T) Glasteilchen mit einer mittleren Teilchengröße von 0,002 bis 10 mm, insbesondere 0,02 bis 1 mm, eingesetzt werden, die eine polyedrische Form mit scharfen Kanten und eine nicht glatte Oberfläche aufweisen. Diese werden dann in einem einmaligen oder mehrfachen Nass-Mahlverfahren unterzogen, bis die Glasteilchen eine mittlere Teilchengröße von 0.1 bis 30 µm aufweisen.

Eine weitere Ausführungsform der Erfindung betrifft ein Verfahren, bei dem als anorganische Trägerpartikel (T) Teilchen aus Bor- oder Phosphat-haltigem Glas eingesetzt werden, die als Silberkomponente (S) ein Silberoxid oder aber ein Ag-Salz mit den Anionen aus der Gruppe Chloride, Bromide, Iodide, Sulfate und Tosylate enthalten.

Die eingesetzten Phosphat-Glas Partikel haben vorzugsweise eine Teilchengröße von 0,5 µm bis 5 mm.

Als weitere (oder aber auch als alternative) biozide Metall-Komponente kann auch ein Metallsalz aus den Metallen der Gruppe Zink, Kupfer, Zinn oder Gold mit den oben genannten Anionen verwendet werden. Auch Borverbindungen sind geeignet.

Gegenstand der Erfindung ist auch eine antimikrobielle Zubereitung (Z) zum Ausrüsten von Fasern, Formteilen oder Folien enthaltend eine antimikrobielle Wirkstoffstoffkomponente (W) sowie ein oder mehrere Hilfs- und Zusatzstoffe.

Eine weitere Ausführungsform der Erfindung betrifft eine antimikrobielle Zubereitung, die 0,01 % bis 10 % der Wirkstoffkomponente (W) enthält.

Auch Gegenstand der Erfindung sind die mit einer antimikrobiellen Wirkstoffkomponente (W) ausgerüsteten Fasern, Folien, Filme und Formkörper. Die mit einer antimikrobiellen Wirkstoffkomponente (W) ausgerüsteten Fasern können beispielsweise im Wesentlichen aus Polyester, Polyamid, Polypropylen und anderen synthetischen Fasern oder aus Mischungen der genannten Materialien untereinander oder mit natürlichen Fasern bestehen.

Eine weitere Ausführungsform der Erfindung betrifft die Verwendung einer antimikrobiellen Wirkstoffkomponente (W) zum Schutz von Mikrofasern, Endlosfasern, Stapelfasern oder anderen Fasern gegen einen Befall von Bakterien.

Die vorliegende Erfindung betrifft auch die mit einer antimikrobiellen Wirkstoffkomponente (W) ausgerüsteten Fasern bzw. Textilien. Bei den mit einer antimikrobiellen Wirkstoffkomponente ausgerüsteten Fasern kann es sich beispielsweise um Fasern handeln, die im Wesentlichen aus Polyester, Polyamid, Polypropylen oder anderen synthetischen Fasern bestehen. Bei den mit einer antimikrobiellen Wirkstoffkomponente (W) ausgerüsteten Textilien kann es sich vorzugsweise um gewebte Waren, gewirkte Waren, Vliese oder Garne handeln, aber auch andere Textilien können ausgerüstet werden.

Eine weitere Ausführungsform der Erfindung betrifft die Verwendung einer Zusammensetzung enthaltend eine antimikrobiellen Wirkstoffkomponente (W) wie oben beschrieben zum Schutz von Fasern und Textilien gegen einen Befall von Mikroorganismen. Auch die Zusammensetzung selbst ist Gegenstand der Erfindung, wobei diese Zusammensetzung die Komponenten bereits enthalten kann oder aber als "Kit von Komponenten" bereitgestellt werden kann.

Die erfindungsgemäße Zubereitung enthält beispielsweise (bezogen auf das Gesamtgewicht der Zubereitung) 0,01 % bis 10 %, insbesondere 0,1 % bis 5 % einer antimikrobiellen Wirkstoffkomponente (W) wie oben beschrieben.

Die Zubereitung kann auch Lösungsmittel (wie Alkohole) und Hilfsstoffe (wie Tenside oder Netz- und Bindemittel) enthalten.

Insbesondere betrifft die Erfindung die Verwendung der oben genannten Zusammensetzungen zum Schutz von Fasern und Textilien gegen einen Befall durch Bakterien, u a. gram-positive und gram-negative, Bakterien.

Die Aufgabe wurde dadurch gelöst, dass eine Nassmahlung in einem für den Wirkstoff inerten Lösungsmittel entwickelt wurde. Hierbei erfolgt neben der Zerkleinerung eine wesentliche Abrundung und Entschärfung der Partikelform. Dies konnte unter anderem durch trans-elektronenmikroskopische Aufnahmen gezeigt werden. Diese "Entgratung der Oberfläche" spielt hinsichtlich der Abrasivität bei der späteren Verspinnung und textilen Weiterverarbeitung eine entscheidende Rolle für die verbesserte Verarbeitung.

Die chemische Konsistenz und die Reaktivität der antimikrobiellen anorganischen Additive, insbesondere wenn sie Silber enthalten, lassen ein schadloses Mahlen in wässriger Phase kaum zu. Es kommt zum vorzeitigen Herauslösen von Ag⁺-Ionen, die dem späteren antimikrobiellen Ausrüstungszweck verloren gehen. Weiterhin kann eine farbliche Vergrauung auftreten, die in der Mehrzahl der Endanwendungen unerwünscht ist. Ferner ist bei der abschließenden Trocknung eine verstärkte Tendenz der Agglomeratbildung zu beobachten.

Besonders bei Verwendung von Gläsern und speziell bei Phosphatgläsern kann das Anlösen in Wasser beim Trocknen zum Verschmelzen führen. Die entstehenden Agglomerate sind nahezu irreversibel stabil und können nur durch erneutes Mahlen gebrochen werden. Bei mit Wirkstoff beaufschlagten Trägern kommt es zu einer direkten Reduktion des Silbergehaltes mit einer entsprechenden Wirkungsverminderung. Durch den Einsatz spezifischer, inerter Medien kann der beschriebene negative Einfluss einer wässrigen Mahlung jedoch ausgeschaltet werden. Dabei werden die gewünschten Feinheitsgrade der Mahlung je nach Einstellung erreicht. Die Oberflächenform der Teilchen erhält jedoch die gewünschten, bei der weiteren Verarbeitung nicht störenden Rundungen, wobei die antimikrobielle Wirkung vollständig erhalten bleibt. Ebenso führt die Trocknung nicht zu Agglomeraten.

Um eine Agglomerat-freie Einarbeitung in die Polymermasse, beispielsweise zur Herstellung von Master Batches zu gewährleisten, können noch während des Mahlprozesses entsprechende, zum späteren Polymer kompatible Oberflächenmodifikatoren eingesetzt werden. Die durchzuführende Nass-Mahlung bezweckt damit nicht ausschließlich eine Zerkleinerung der Partikel, sondern ganz wesentlich auch eine Glättung der Oberfläche der Partikel. Derartige Materialmodifikationen sind sinnvoll für alle Anwendungen, in denen eine Abrasion einen störenden Effekt hat oder stören kann.

Der Einsatz von nass und inert gemahlenen Wirkstoffen erfolgt z.B. in folgenden Produkten:
- Spinnfasern für Endlosfilamente, Stapelfasern und Vliestextilien,
- Folien, sowohl Guss- als auch Blasfolien,
- Extrusions- und Co- Extrusionsprodukten,
- Farben, Lacken und Filmen.

Dabei wird auch darauf geachtet, dass die Endkorngröße auf die jeweiligen Anforderungen der Endanwendung eingestellt wird, um gleichzeitig die störende Abrasion zu vermeiden und ausreichend große Partikel zur Sicherstellung der antimikrobiellen Wirkung zur Verfügung zu haben. Dabei darf die eingesetzte Korngröße in sensiblen Anwendungen wie Spinnen oder Folieblasen mechanisch, technologisch, funktionell und optisch nicht stören.

Als nass und inert gemahlene Wirkstoffe werden z.B. folgende im Handel erhältliche bioziden Produkte eingesetzt:
Sanitized-Silber von SANITIZED AG (Schweiz),
Ionpure von Ishizuka (Japan),
JMAC von Clariant (Schweiz),
Novaron von Toagosai (Japan),
Alphasan von Milliken (USA)
Irgaguard- Silber von CIBA (Schweiz),
Zeomic- Silber von AgIon (Hersteller in USA).

Bei diesen Produkten handelt es sich im Wesentlichen um Produkte, die Silber als Wirkstoff enthalten. Sie enthalten bevorzugt 0,1 bis 10 Gew.-% Silber in einem anorganischen Träger, der z. B. aus Glas, Titandioxid, Zirkoniumphosphat oder Zeolith besteht.

Die Erfindung wird auch durch die nachfolgenden Beispiele näher erläutert:

### Beispiele:

### Herstellung von bioziden Mischungen

### Beispiel 1: Biozide Mischung I

300 g des Biozid-Komposits (BC A 21-51, Sanitized) werden in 700 g Butylacetat dispergiert. Anschließend wird diese Mischung in einer Mühle (PML I der Firma Bühler AG, Mahlraum Zr02, Mahlscheiben Zr02) mit 0,3 mm Yttrium-stabilisierten Zr02 Mahlkugeln der Firma Tosoh im Rezirkulationsmodus vermahlen. Der Energieeintrag beträgt 2000 kWh/t. Man erhält die Dispersion I.

Die Dispersion I wird mit 15 g CBT100-Pulver der Firma Cyclics versetzt. Anschließend wird die Dispersion durch Rühren homogenisiert und das Lösemittel am Rotationsverdampfer unter Vakuum entfernt. Das so erhaltene Pulver wird in einem Mörser aufgemahlen. Man erhält die erfindungsgemässe biozide Mischung I (95,2 Gew.-% Biozid-Komposit (BC A 21-51)).

### Beispiel 2: Biozide Mischung II

300 g des Biozid-Komposits (BC A 21-51, Sanitized) werden in 700 g Butylacetat dispergiert. Anschließend wird diese Mischung in einer Mühle (PML I der Firma Bühler AG, Mahlraum Zr02, Mahlscheiben Zr02) mit 0,3 mm Yttrium-stabilisierten Zr02 Mahlkugeln der Firma Tosoh im Rezirkulationsmodus vermahlen. Der Energieeintrag beträgt 2000 kWh/t. Man erhält die Dispersion II.

Die Dispersion II wird mit 120 g CBT100-Pulver der Firma Cyclics versetzt. Anschließend wird die Dispersion durch Rühren homogenisiert und das Lösemittel am Rotationsverdampfer unter Vakuum entfernt. Das so erhaltene Pulver wird in einem Mörser aufgemahlen. Man erhält die erfindungsgemässe biozide Mischung II (71,4 Gew.-% Biozid-Komposit (BC A 21-51)).

### Beispiel 3: Biozide Mischung III

300 g des Biozid-Komposits (BC A 21-51, Sanitized) werden in 700 g Butylacetat dispergiert. Anschließend wird diese Mischung in einer Mühle (PML I der Firma Bühler AG, Mahlraum Zr02, Mahlscheiben Zr02) mit 0,3 mm Yttrium-stabilisierten Zr02 Mahlkugeln der Firma Tosoh im Rezirkulationsmodus vermahlen. Der Energieeintrag beträgt 2000 kWh/t. Man erhält die Dispersion III. Die Dispersion III wird mit 150 g CBT100-Pulver der Firma Cyclics versetzt. Anschließend wird die Dispersion durch Rühren homogenisiert und das Lösemittel am Rotationsverdampfer unter Vakuum entfernt. Das so erhaltene Pulver wird in einem Mörser aufgemahlen.

Man erhält die erfindungsgemässe biozide Mischung III (66,6 Gew.-% Biozid-Komposit (BC A 21-51)).

### Vergleichsbeispiel 1: Biozide Mischung IV

1000 g des Biozid-Komposits (BC A 21-51, Sanitized) werden in 3000 g Butylacetat dispergiert. Anschließend wird diese Mischung in einer Mühle (PML I der Firma Bühler AG, Mahlraum Zr02, Mahlscheiben Zr02) mit 0,3 mm Yttrium-stabilisierten Zr02 Mahlkugeln der Firma Tosoh im Rezirkulationsmodus vermahlen. Der Energieeintrag beträgt 2000 kWh/t. Man erhält die Dispersion IV. Anschließend wird das Lösemittel am Rotationsverdampfer unter Vakuum entfernt. Das so erhaltene Pulver wird in einem Mörser aufgemahlen und mit 250 g Licolub WE 4 (Wachs der Firma Clariant) homogen vermischt.

Man erhält eine biozide Mischung IV (80 Gew.-% Biozid-Komposit (BC A 21-51)).

### Vergleichsbeispiel 2: Herstellung von nasszerkleinertem Biozid-Komposit (BC A 21-51, Sanitized)

1000 g des Biozid-Komposits (BC A 21-51, Sanitized) werden in 3000 g Butylacetat dispergiert. Anschließend wird diese Mischung in einer Mühle (PML I der Firma Bühler AG, Mahlraum Zr02, Mahlscheiben Zr02) mit 0,3 mm Yttrium-stabilisierten Zr02 Mahlkugeln der Firma Tosoh im Rezirkulationsmodus vermahlen. Der Energieeintrag beträgt 2000 kWh/t. Man erhält die Dispersion IV. Anschließend wird das Lösemittel am Rotationsverdampfer unter Vakuum entfernt. Das so erhaltene Pulver wird in einem Mörser aufgemahlen. Man erhält das Mikrobizid-Komposit Pulver I (100 Gew.-% Biozid-Komposit (BC A 21-51)).

### Herstellung von bioziden Polymeren

Zur Herstellung der bioziden Polymere wird ein Extruder BTSK 30/40D der Firma Bühler AG verwendet. Hierbei werden die bioziden Mischungen (I bis IV) bzw. das Pulver I verwendet.

### A) Herstellung von hochgefülltem biozdem PBT

Zur Herstellung der hochgefüllten biozden PBTs wird PBT Ultradur B 2550 Natur der Firma BASF verwendet.

### Extrudereinstellungen:

### Einstellung des Extruders (BTSK 30/40D)

**Tabelle 1: Einstellung der Zylinder-Solltemperatur:**

| Zyl.1 | Zyl.2 | Zyl.3 | Zyl.4 | Zyl.5 | Zyl.6 | Zyl.7 | Zyl.8 | Zyl.9 | Zyl.10 | Sieb | Kopf |
|---|---|---|---|---|---|---|---|---|---|---|---|
| 20 °C | 260° C | 240 °C | 240 °C | 240 °C | 240 °C | 240 °C | 240 °C | 240 °C | 240 °C | 240 °C | 250 °C |

- Verfahrenslänge: 40 D
- PBT-Zugabe: Zylinder 1
- Zugabe der bioziden Mischungen (I bis IV) bzw. Pulver 1 : Zylinder 3
- Atmosphärische Entgasung: Zylinder 3, Vakuumentgasung: Zylinder 8
- Siebe: 50/325/50 Mesh
- Spez. Energie: 0,25 kWh/kg
- Düse: 1 x 8,0 mm

### Beispiel 4: Hochgefülltes biozides PBT I

Aus der in Beispiel 1 erhaltenen bioziden Mischung I wird mit den oben beschrieben Parametern ein biozides PBT I mit einem Feststoffgehalt an Biozid-Komposit (BC A 21-51) von 16,8 Gew.-% hergestellt mit einem Melt Flow Index von 91 g/10 min bei 280 °C.

### Beispiel 5: Hochgefülltes biozides PBT II

Aus der in Beispiel 2 erhaltenen bioziden Mischung II wird mit den oben beschrieben Parametern ein biozides PBT II mit einem Feststoffgehalt an Biozid-Komposit (BC A 21-51) von 17 Gew.-% hergestellt mit einem Melt Flow Index von 94 g/10 min bei 280 °C.

### Beispiel 6: Hochgefülltes biozides PBT III

Aus der in Beispiel 3 erhaltenen bioziden Mischung III wird mit den oben beschrieben Parametern ein biozides PBT mit einem Feststoffgehalt an Biozid-Komposit (BC A 21-51) von 19,4 Gew.-% hergestellt mit einem Melt Flow Index von 100 g/10 min bei 280 °C.

### Vergleichsbeispiel 3: Hochgefülltes biozides PBT IV

Aus der in Vergleichsbeispiel 1 erhaltenen bioziden Mischung IV wird mit den oben beschrieben Parametern ein biozides PBT IV mit einem Feststoffgehalt an Biozid-Komposit (BC A 21-51) von 18 Gew.-% hergestellt. Der Melt Flow Index kann nicht bestimmt werden.

### Vergleichsbeispiel 4: Hochgefülltes biozides PBT V

Aus dem in Vergleichsbeispiel 2 erhaltenen bioziden Pulver I wird mit den oben beschrieben Parametern ein biozides PBT V mit einem Feststoffgehalt an Biozid-Komposit (BC A 21-51) von 17,2 Gew.-% hergestellt. Der Melt Flow Index kann nicht bestimmt werden.

### B) Herstellung von biozidem PET aus hochgefülltem biozidem PBT und Druckfilterwertbestimmung

Zur Herstellung der bioziden PETs wird PET G 6506 verwendet.

Aus den hochgefülltem bioziden PBTs aus den Beispielen 4 bis 6 und den Vergleichsbeispielen 3 und 4 werden unter Zugabe von PET biozide PETs hergestellt sowie deren Druckfilterwert mittels des Druckfiltertesters FT-E20T-MP-IS der Firma Collin mit einem Sieb PZ 14 (Siebmaschenweite 4 µm) bestimmt.

### Beispiel 7: Biozides PET I

Biozides PET I mit einem Biozid-Komposit-(BC A 21-51)-Feststoffgehalt von 2,5 Gew.-% hergestellt aus biozidem PBT I (Beispiel 4): Druckfilterwert 0,5 bar/g.

### Beispiel 8: Biozides PET II

Biozides PET II mit einem Biozid-Komposit-(BC A 21-51)-Feststoffgehalt von 2,5 Gew.-% hergestellt aus biozidem PBT II (Beispiel 5): Druckfilterwert 0,26 bar/g.

### Beispiel 9: Biozides PET III

Biozides PET III mit einem Biozid-Komposit-(BC A 21-51)-Feststoffgehalt von 2,5 Gew.-% hergestellt aus biozidem PBT III (Beispiel 6): 0,28 bar/g.

### Vergleichsbeispiel 5: Biozides PET IV

Biozides PET IV mit einem Biozid-Komposit-(BC A 21-51)-Feststoffgehalt von 2,5 Gew.-% hergestellt aus biozidem PBT IV (Vergleichsbeispiel 3): nicht bestimmbar, Sieb setzt sich zu.

### Vergleichsbeispiel 6: Biozides PET V

Biozides PET V mit einem Biozid-Komposit-(BC A 21-51)-Feststoffgehalt von 2,5 Gew.-% hergestellt aus biozidem PBT V (Vergleichsbeispiel 4): nicht bestimmbar, Sieb setzt sich zu.

### Beispiel 10: Teilchengröße und Teilchenform

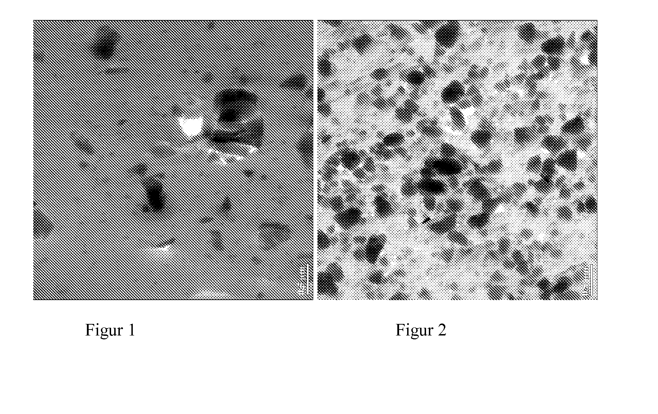

Ein silberhaltiges Phosphatglas wird in einem herkömmlichen Trockenmahlprozess gemahlen. Die photographische Darstellung in Figur 1 zeigt grobe und kantige Teile mit sehr unterschiedlicher Größe an der Materialoberfläche. Diese führen an Fadenleitorganen zu einer erheblichen Abrasion sowie zur Bildung einer rauhen Oberfläche der Fadenleitelemente. Diese Oberfläche selbst bewirkt wiederum einen Schmirgel-Effekt am Faden und führt zu einer Fibrillierung und zu Kapillarbrüchen.

Die nass und inert gemahlenen Teilchen des silberhaltigen Phosphatglases weisen hingegen eine homogene Teilchengrößenverteilung und eine geglättete Oberfläche auf (siehe Figur 2). Sie führen wie in Beispiel 11 weiter ausgeführt nur noch zu einer minimalen und technisch vernachlässigbaren Abrasion.

### Beispiel 11: Messung der Abrasion an einem Faden aus synthetischem Material

Abrasionswerte können mit Hilfe des in der Literatur bekannten Abrasionstesters "Honigmann" bestimmt werden.

Dazu läuft im vorliegenden Test ein Faden (aus Polyester mit einem Titer von 75 dtex und 64 Einzelfäden) in definiertem Klima mit definierter Vorspannkraft und definierter Prüflänge über eine Kupferkante. Der erzeugte Einschnitt wird gemessen.

Es ergaben sich folgende Messwerte:

| PES 75f64 | Fall | Gehalt an Wirkstoff in % | Abrasion in µm/ 1000 m |
|---|---|---|---|
| Vergleich: Silber in Phosphatglas, (Ag-Komponente: Ionpure ZAF) Trockenmahlung, 2µm (D98) | 1 | 0.4 | 229 |
| Vergleich: Polyester ohne Silber; Halbmatt, d. h. mit 0.3% TiO₂ | 2 | 0 | 3.3 |
| Polyester ohne Silber; Matt, d. h. mit 1.5% TiO₂ | 3 | 0 | 20.0 |
| Polyester mit SANITIZED- Silber, Nassmahlung, 0.5µm (D98) und 0.3% TiO₂ | 4 | 0.6 | 4.9 |

Das nass auf eine mittlere Teilchengröße von 0.5µm gemahlene SANITIZED-Silber (Fall 4) weist trotz des Gehalts an biozider Komponente eine deutliche geringere Abrasion gegenüber dem nach einem vergleichbaren Verfahren mit Ionpure ZAF und Trockenmahlung (Fall 1) gewonnenen Produkt auf. Die Abrasion von Fall 4 entspricht einem halbmatt-Polyester ohne Biozid (Fall 2). Sie ist technisch nahezu unbedeutend und deutlich geringer als bei dem matt- Polyester ohne Biozid (Fall 3).

### Beispiel 12: Antibakterielle Wirkung

Aus den gesponnenen Filamenten wurden Strickstrümpfe hergestellt die nach 1, 5 und 10 Wäschen auf antibakterielle Wirkung untersucht wurden. Die Wäschen erfolgten jeweils nach der Norm EN ISO 6330 (6A). Die antibakterielle Wirkung wurde mit der Methode ASTM E 21-49 und dem Keim Staphylococcus aureus ATCC 6538 getestet.

| Produkt | Zugabe* | Wirkstoff | Wäschen | Keimreduktion | Bakteriostatische Aktivität |
|---|---|---|---|---|---|
| | % | % | Anzahl | Log Einheiten | Log Einheiten |
| Ohne Silber, nur Polyester | 0 | 0 | 1 | 0.16 | |
| Polyester mit Sanitized ** | 2.0 | 0.4 | 1 | 2.33 | 2.17 |
| Polyester mit Sanitized ** | 2.0 | 0.4 | 5 | 2.96 | 2.80 |
| Polyester mit Sanitized ** | 2.0 | 0.4 | 10 | >3.99 | >3.83 |

| | | | | | |
|---|---|---|---|---|---|
| * Masterbatch **Sanitized Silber MasterBatch | | | | | |

Die anfangs durch die Herstellung bedingt auf dem Gewebe vorhandene Spinnpräparation kann in den ersten Waschzyklen zu einer gewissen Blockade des Silber-Wirkstoffes führen, der erst nach mehreren Wäschen seine volle Wirkung entfalten kann.

Eine Keimreduktion um 2 Log Einheiten oder 99% wird als sehr gute antibakterielle Wirkung bewertet.

### Beispiel 13: Titer, Faserfeinheit

Bei der Auswahl der mittleren Korngröße sind - wie oben dargestellt - zwei gegenläufige Anforderungen zu berücksichtigen. Einerseits verlangt die Spinnsicherheit eine möglichst geringe Korngröße und die Forderung nach minimaler Abrasion wird mit möglichst idealer Rundung der Teilchen erfüllt.

Dem gegenüber besteht die Gefahr, dass zu kleine Teilchen nicht die Oberfläche der Faser durchbrechen und ihre antibakterielle Wirkung nicht oder nur ungenügend entfalten können.

Durch Versuche ergab sich jeweils für unterschiedliche Fasertypen und Einsatzgebiete ein optimaler Bereich für die Herstellung von Endlos- und Stapelfasern, der beiden Forderungen gerecht wird.

Dies wird durch die nachfolgenden Messungsergebnisse verdeutlicht:

| Fasertyp, Faserfeinheit | Mittlere Korngröße nach der Nassmahlung µm |
|---|---|
| Super- Mikro- Faser | 0.01 - 0.5 |
| Mikrofaser | 0.1 - 1.0 |
| Baumwollfasertypen | 0.2 - 2.0 |
| Teppich- und grobe Fasern | 0.5 - 10 |

### Beispiel 14: Einsatz der bioziden Komponente für Folien, Co- Extrusionsschichten und Lacke

Mit dem Nassmahlungsverfahren stehen kompakte, kleine und antimikrobiell wirkende Teilchen zur Verfügung, die weder die Produktqualität beinträchtigen, noch eine übermäßige Abnutzung der Werkzeuge und Maschinen verursachen.

In Abhängigkeit von der jeweiligen Schichtdicke des auszurüstenden Produktes sollte eine gewisse Mindestteilchengröße zur vollen Entfaltung der antimikrobiellen Wirkung eingesetzt werden. Die Teilchengröße sollte ferner den Zehnten Teil der Dicke des auszurüstenden Materials nicht übersteigen und kann bei dickeren Schichten und kompakten Teilen einige Mikrometer betragen.

## Patentansprüche

1. Biozide Wirkstoffkomponente auf Basis von anorganischen Trägerpartikeln, die eine biozide Komponente enthalten, wobei die anorganischen Trägerpartikel eine runde Gestalt haben.

2. Biozide Wirkstoffkomponente gemäß Anspruch 1, **dadurch gekennzeichnet, dass** die anorganischen Trägerpartikel nahezu kugelförmig sind.

3. Biozide Wirkstoffkomponente gemäß einem der Ansprüche 1 bis 2, **dadurch gekennzeichnet, dass** die anorganischen Trägerpartikel nahezu kugelförmig sind und einen Durchmesser von 0,01 bis 100 µm aufweisen.

4. Verfahren zur Herstellung einer bioziden Wirkstoffkomponente, **dadurch gekennzeichnet, dass** anorganischen Trägerpartikel, in einem Mahlverfahren so gemahlen werden, dass sie eine nahezu kugelförmige Form erhalten.

5. Biozide Zubereitung enthaltend eine biozide Wirkstoffkomponente gemäß einem der Patentansprüche 1 bis 3 sowie einen oder mehrere Hilfs- oder Zusatzstoffe.

6. Verwendung einer bioziden Wirkstoffkomponente gemäß einem der Patentansprüche 1 bis 3 zur Herstellung von biozid ausgerüsteten Gegenständen.

7. Mit einer bioziden Wirkstoffkomponente gemäß einem der Patentansprüche 1 bis 3, biozid ausgerüsteter Gegenstand.
